Europäisches Patentamt

**European Patent Office**

**Office européen des brevets**

(11) Numéro de publication: **0 076 742**
**A1**

## (12) DEMANDE DE BREVET EUROPEEN

(21) Numéro de dépôt: **82401767.7**

(22) Date de dépôt: **29.09.82**

(51) Int. Cl.³: **A 01 C 23/00**

(30) Priorité: **30.09.81 FR 8118395**

(43) Date de publication de la demande:
**13.04.83 Bulletin 83/15**

(84) Etats contractants désignés:
**AT BE DE GB IT NL SE**

(71) Demandeur: **SOCIETE ANONYME DES ANCIENS ETABLISSEMENTS LECOMTE**
**Saint Martin des Besaces**
**F-14350 Le Beny Bocage(FR)**

(72) Inventeur: **Lecomte, Gérard Ernest**

**14 St. Martin des Besaces(FR)**

(74) Mandataire: **Vander-Heym, Roger**
**172 Boulevard Voltaire**
**F-75011 Paris(FR)**

(54) Dispositif pour charger du lisier dans une benne.

(57) Dispositif pour charger du lisier dans une benne, caractérisé en ce qu'il est constitué par un bras en deux parties (3-4) porté par la benne (1) sur laquelle il peut pivoter par une extrémité, et comportant à l'autre une turbine broyeuse (5), d'un type connu, qui refoule le lisier dans une conduite (6) portée par ledit bras et dont l'extrémité (6a), opposée à ladite turbine broyeuse, débouche au-dessus de ladite benne et pénètre partiellement dans cette dernière au-dessus de laquelle elle est astreinte à suivre une trajectoire rectiligne.

Fig.3

EP 0 076 742 A1

Croydon Printing Company Ltd.

**0076742**

La présente invention est relative à un dispositif permettant de charger du lisier dans une benne, portant ledit dispositif, comportant de préférence des moyens pour épandre ledit lisier.

Le remplissage d'une benne à lisier comporte deux exigences :

-la rapidité du remplissage;

-la propreté de l'opération.

La rapidité du remplissage exclut donc l'emploi de tous dispositifs intermittents tels qu'une pelle mécanique.

La propreté de l'opération exclut aussi tous dispositifs dont une partie importante doit pénétrer dans le lisier durant le chargement.

Selon l'invention, le dispositif est constitué par un bras, en deux parties articulées, porté par la benne sur laquelle il peut pivoter par une de ses extrémités et comportant à l'autre une turbine broyeuse, d'un type connu, qui refoule le lisier dans une conduite portée par ledit bras et dont l'extrémité opposée à la turbine broyeuse débouche au-dessus de la benne et est astreinte à suivre une trajectoire rectiligne au-dessus de celle-ci.

Selon une autre caractéristique de l'invention, la turbine broyeuse est entraînée par la prise de force mécanique du véhicule tracteur par l'entremise de la vis mélangeuse usuelle de la benne qui entraîne un premier boîtier de renvoi d'angle qui entraîne, à son tour, par l'entremise de courroies ou de chaînes, un second boîtier de renvoi d'angle transmettant le mouvement à la turbine, l'axe de sortie du premier boîtier et celui d'entrée du second boîtier étant confondus respectivement avec l'axe de pivotement du bras sur la benne et avec celui d'articulation des deux parties dudit bras.

D'autres caractéristiques apparaîtront mieux par la description qui va suivre, faite en se référant aux dessins annexés, sur lesquels:

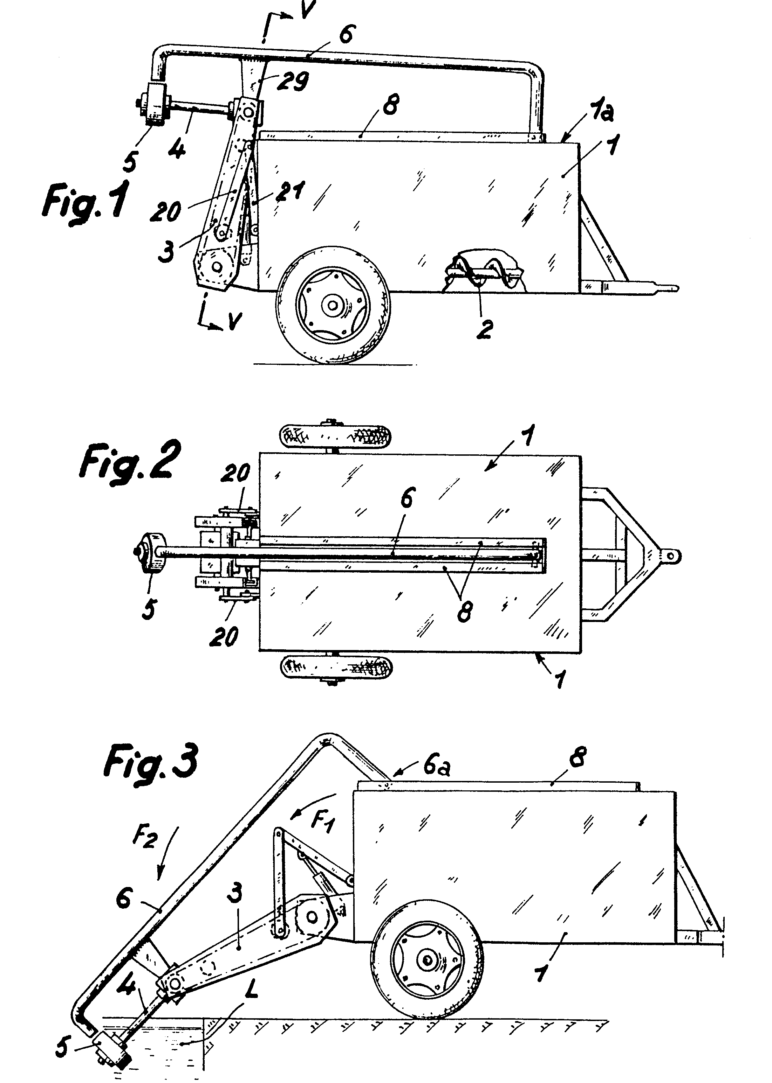

La figure 1 est une vue en élévation d'une benne à lisier équipée du dispositif de l'invention ;

La figure 2 est la vue de dessus de la figure 1;

Les figures 3 et 4 sont des vues analogues à celle 1 montrant le dispositif en position de travail;

La figure 5 est une vue en coupe, à plus grande échelle, effectuée selon la ligne V-V de la figure 1;

La figure 6 est une vue en coupe effectuée selon la ligne VI-VI de la figure 5;

La figure 7 est une vue partielle, en perspective, montrant le guidage de l'extrémité supérieure de la conduite.

En se reportant aux dessins, on voit que 1 est une benne à lisier, d'un type connu, comportant notamment une vis 2 mélangeuse et un dispositif d'épandage latéral ( non représenté) entraîné par la prise de force mécanique du véhicule tracteur.

A l'arrière de la benne est articulé un bras en deux parties 3 et 4, l'extrémité libre de la partie 4 portant une turbine broyeuse 5, d'un type connu, pouvant refouler le lisier dans une conduite 6 portée par ledit bras et dont une extrémité, qui débouche sur le dessus de la benne 1, est astreinte à suivre une trajectoire rectiligne.

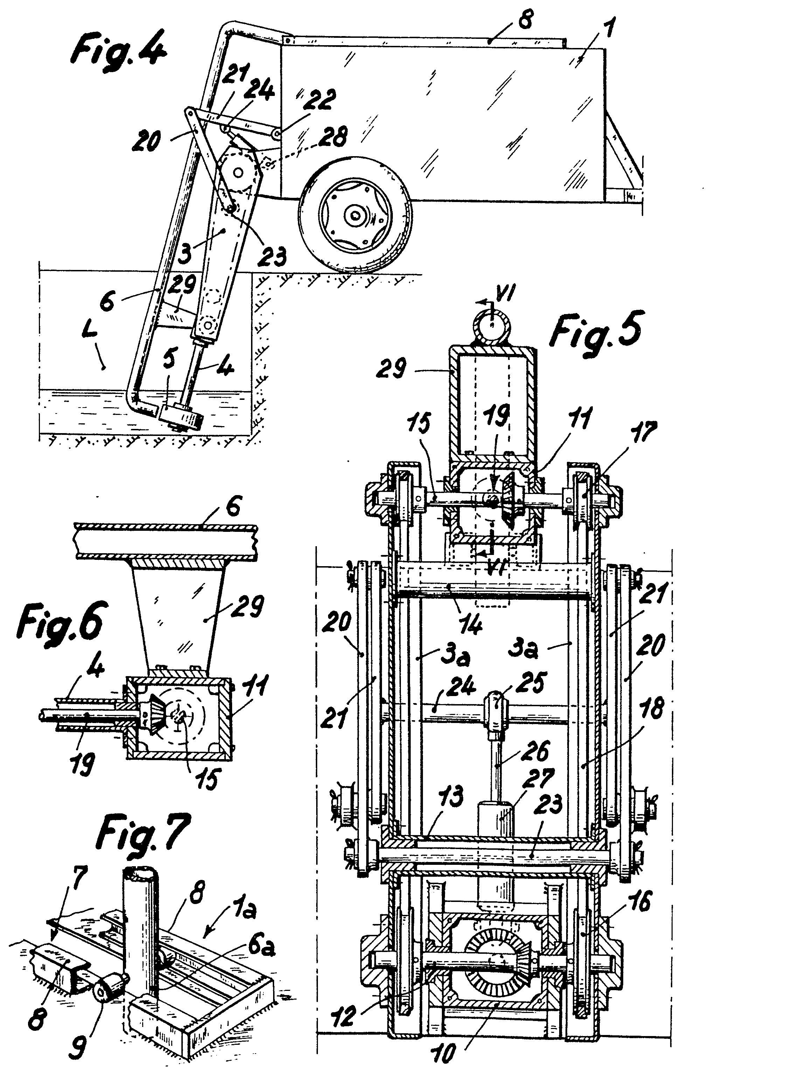

A cet effet, et selon un mode de réalisation (figure 7) la partie supérieure 1a de la benne présente une fente longitudinale 7, de passage de l'extrémité 6a de la conduite 6, le long de laquelle sont disposés deux rails 8 de guidage de ladite extrémité qui est pourvue de patins ou de galets 9.

L'énergie mécanique délivrée par la vis 2 est transmise à un boîtier de renvoi d'angle 10 rendu solidaire de la benne et qui transmet le mouvement à un second boîtier de renvoi d'angle 11 porté par la partie 4 du bras.

Selon un mode de réalisation, la partie 3 du bras est double et chaque élément 3a la composant est disposé de chaque côté du boîtier 10 et peut pivoter autour de l'arbre de sortie 12 dudit boîtier. Les éléments 3a sont réunis par des entretoises, telles que celles 13 et 14 ( figure 5).

A leur autre extrémité, les éléments 3a peuvent pivoter autour de l'axe de l'arbre d'entrée 15 du boîtier 11. L'arbre 12 entraîne celui 15 par l'entremise de poulies 16-17 et de courroies 18; les poulies et les courroies peuvent être remplacées par des roues dentées et des chaînes. Les boîtiers et les poulies sont déterminés de façon à ce que l'arbre de sortie 19 du boîtier 11 tourne plus vite que la vis entraînée par la prise de force mécanique du véhicule tracteur.

La manoeuvre du bras 3-4 en vue de plonger la turbine broyeuse dans la fosse à lisier L est commandée par une paire de bras (20-21) articulés entre eux et, par chacune de leur extrémité libre, respectivement sur la benne 1 en 22 et sur la partie 3 du bras en 23.

Selon un mode de réalisation et comme montré sur la figure 5, on utilise deux paires de bras 20-21 disposés chacune à l'extérieur des éléments 3a.

Les bras 21 sont réunis par une traverse 24 sur laquelle s'articule la tête 25 de la tige 26 du piston d'un vérin 27 à double effet dont le corps est articulé en 28 sur la benne ( figure 4).

La conduite 6 est rendue solidaire du boîtier 11 par l'entremise d'une potence 29.

En se reportant aux dessins, on voit qu'en position de transport, la conduite 6 s'étend au-dessus de la benne sans pénétrer dans cette dernière et que la tige 26 du vérin 27 est sortie du corps du vérin.

Par la rétraction de la tige du vérin on détermine le pivotement, selon la flèche F1, des bras 21 et 20 et, par suite, le pivotement dans le même sens, de la partie 3 du bras. Simultanément la conduite 6, rigide, se déplace vers l'arrière de la benne en pivotant selon la flèche F2 et en entraînant la partie 4 du bras qui pivote dans le même sens.

Il ressort des explications ci-dessus et des dessins que seule une faible partie du dispositif pénètre dans le lisier, à savoir:la turbine broyeuse 5 et l'extrémité correspondante de la conduite 6.

Bien entendu, la présente invention ne se limite pas au mode de réalisation décrit et représenté mais s'étend, au contraire, à toutes variantes de formes et dimensions.

REVENDICATIONS

1-Dispositif pour charger du lisier dans une benne, caractérisé en ce qu'il est constitué par un bras en deux parties (3-4) porté par la benne (1) sur laquelle il peut pivoter par une extrémité, et comportant à l'autre une turbine broyeuse (5), d'un type connu, qui refoule le lisier dans une conduite (6) portée par ledit bras et dont l'extrémité (6a), opposée à ladite turbine broyeuse, débouche au-dessus de ladite benne et pénètre partiellement dans cette dernière au-dessus de laquelle elle est astreinte à suivre une trajectoire rectiligne.

2-Dispositif selon la revendication 1,caractérisé en ce que l'entraînement de la turbine broyeuse (5) est assuré par la prise de force mécanique du véhicule tracteur par l'entremise d'un premier boîtier de renvoi d'angle (10) solidaire de la benne entraînant un second boîtier (11) rendu solidaire de la partie (4) du bras, la partie (3) dudit bras pouvant pivoter respectivement autour de l'arbre de sortie du premier boîtier et autour de celui d'entrée du second boîtier.

3- Dispositif selon la revendication 2,caractérisé en ce que la conduite (6) est rigide et est rendue solidaire de la partie 4 du bras ou du boîtier (11) le supportant par l'entremise d'une potence (29).

4- Le pivotement de la partie 3 du bras porte-turbine est assuré par un vérin (25,26,27) à double effet entraînant au moins une paire de bras (20-21), d'une part articulés entre eux et, d'autre part, par leur extrémité, respectivement sur la benne et sur ladite partie 3.

0076742

Fig.1

Fig.2

Fig.3

**Fig. 4**

**Fig. 5**

**Fig. 6**

**Fig. 7**

**0076742**

Numéro de la demande

# RAPPORT DE RECHERCHE EUROPEENNE

Office européen
des brevets

EP 82 40 1767.7

## DOCUMENTS CONSIDERES COMME PERTINENTS

| Catégorie | Citation du document avec indication, en cas de besoin, des parties pertinentes | Revendication concernée |
|---|---|---|
| X | GB - A - 2 019 346 (C.E. WALLEY et al.)<br>* revendications 1, 12 ; page 1, ligne 79 à page 2, ligne 16; fig. 1, 2 * | 1 |
| A | | 2,4 |
| | -- | |
| A | GB - A - 2 049 384 (JWT AGRICULTURAL IMPLEMENTS LTD.)<br>* revendications 6, 8, 9 ; page 1 , ligne 108 à page 2, ligne 37 ; fig. 1 * | 1-4 |
| | ---- | |

**CLASSEMENT DE LA DEMANDE (Int. Cl. 3)**

A 01 C 23/00

**DOMAINES TECHNIQUES RECHERCHES (Int. Cl. 3)**

A 01 C 3/00
A 01 C 23/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| Berlin | 20-12-1982 | BERGZOLL |

OEB Form 1503.1   06.78